# FASCICULE DE BREVET EUROPEEN

(11) **EP 3 134 620 B1**
(45) Date de publication et mention de la délivrance du brevet: **21.03.2018**
(21) Numéro de dépôt: 15723267.9
(22) Date de dépôt: 23.04.2015
(51) Int. Cl.: F01D 5/18

(54) **AUBE POUR TURBINE DE TURBOMACHINE COMPRENANT UN CIRCUIT DE REFROIDISSEMENT À HOMOGÉNÉITÉ AMÉLIORÉE**
TURBINENSCHAUFEL EINER TURBOMASCHINE MIT EINEM KÜHLKREISLAUF MIT VERBESSERTER HOMOGENITÄT
TURBOMACHINE TURBINE BLADE COMPRISING A COOLING CIRCUIT WITH IMPROVED HOMOGENEITY

(30) Priorité: 24.04.2014 FR 1453708
(43) Date de publication de la demande: 01.03.2017
(73) Titulaire: SAFRAN AIRCRAFT ENGINES, 75015 Paris (FR)
(72) Inventeur: DUJOL, Charlotte, Marie, 77550 Moissy-Cramayel Cedex (FR); ENEAU, Patrice, 77550 Moissy-Cramayel Cedex (FR); DIGARD BROU DE CUISSART, Sébastien, 77550 Moissy-Cramayel Cedex (FR); VOLLEBREGT, Matthieu, Jean-Luc, 77550 Moissy-Cramayel Cedex (FR)
(74) Mandataire: Brevalex
(86) Numéro de dépôt international: PCT/FR2015/051111
(87) Numéro de publication internationale: WO 2015/162389

(56) Documents cités:
- EP-A1- 1 111 190
- EP-A1- 1 288 438
- EP-A1- 1 503 038
- EP-A1- 1 790 819

## Description

### DOMAINE TECHNIQUE

La présente invention se rapporte au domaine des turbomachines d'aéronef et concerne plus particulièrement le refroidissement des aubes mobiles des turbines au sein de telles turbomachines.

### ÉTAT DE LA TECHNIQUE ANTÉRIEURE

Au sein d'une turbomachine utilisée pour propulser un aéronef, les aubes des turbines sont soumises aux fortes chaleurs des gaz de combustion issus de la chambre de combustion.

Pour protéger les aubes de ces températures élevées, il est connu de refroidir les aubes au moyen de circuits de refroidissement formés de cavités ménagées à l'intérieur des pales des aubes. Ces circuits de refroidissement sont en général alimentés en air relativement frais prélevé au niveau d'un étage de compresseur de la turbomachine.

Néanmoins, l'amélioration constante de la performance des moteurs d'aéronefs conduit à une augmentation de la température de ces gaz de combustion. Les progrès réalisés en ce qui concerne les matériaux et revêtements utilisés pour former les aubes ne permettent pas à eux seuls de compenser l'accroissement des températures.

Par conséquent, il est souhaitable d'améliorer les performances des circuits de refroidissement des aubes.

Au cours de ses travaux de recherche, la demanderesse a en particulier découvert qu'un inconvénient des circuits de refroidissement connus réside dans l'inhomogénéité du refroidissement sur chacune des parois d'intrados et d'extrados des aubes.

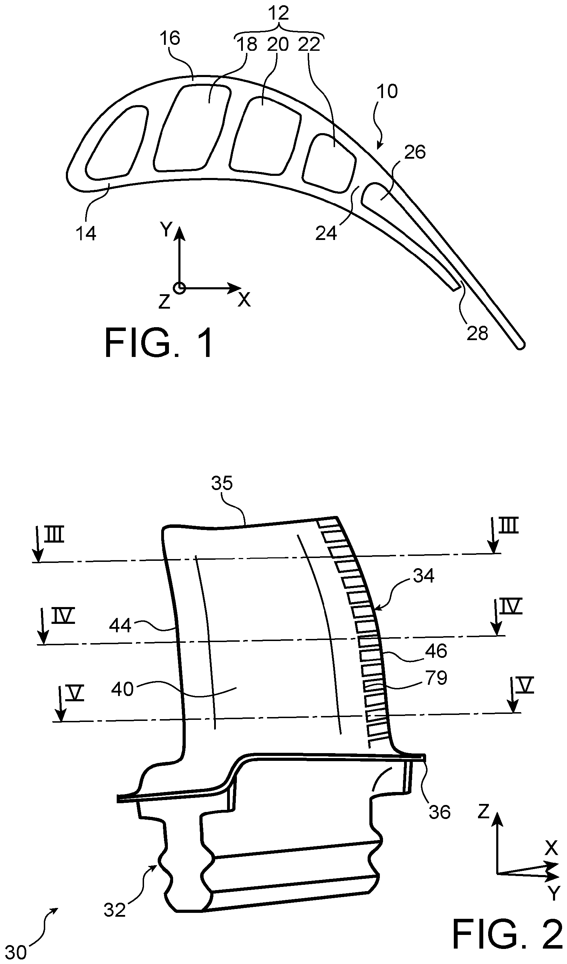

La demanderesse a identifié une cause de telles inhomogénéités, comme cela va maintenant être expliqué en référence à la figure 1.

La figure 1 représente la pale 10 d'une aube de turbine de turbomachine d'un type connu, vue en section selon un plan transversal de la pale, c'est à dire un plan orthogonal à la direction de l'envergure ou de la longueur de la pale, qui se confond avec la direction radiale par rapport à l'axe moteur lorsque l'aube est montée dans une turbine de turbomachine.

La pale 10 comprend un circuit de refroidissement interne 12 formé de trois cavités s'étendant selon la direction radiale, agencées entre la paroi d'intrados 14 et la paroi d'extrados 16, et interconnectées en série de manière à permettre la circulation d'un flux d'air de refroidissement depuis une section d'entrée de la première cavité 18 jusqu'à la deuxième cavité 20 puis jusqu'à une section de sortie de la troisième cavité 22. La section d'entrée de la première cavité 18 est raccordée à des moyens d'alimentation en air intégrés à un pied de l'aube et est donc agencée au niveau d'une extrémité radialement interne de la première cavité. La section de sortie de la troisième cavité 22 est en général formée à proximité de l'extrémité radialement externe de la cavité, et prend en général la forme d'orifices formés dans les parois d'intrados et/ou d'extrados et/ou dans une paroi de fond délimitant l'extrémité radialement externe de la cavité.

Ainsi, l'air circule dans les première et troisième cavités 18, 22 dans la direction radiale vers l'extérieur, tandis que l'air circule dans la deuxième cavité 20 dans la direction radiale vers l'intérieur.

Du fait de la force de Coriolis induite par la rotation de l'aube autour de l'axe moteur, la demanderesse s'est aperçu que l'air circulant dans les première et troisième cavités 18, 22 est dévié en direction de la paroi d'intrados 14 au détriment de la paroi d'extrados 16, tandis que l'inverse se produit dans la deuxième cavité 20. Une autre aube de turbomachine de type connu est décrite dans EP 1 288 438 A1.

### EXPOSÉ DE L'INVENTION

L'invention a notamment pour but d'apporter une solution simple, économique et efficace à ce problème.

Elle propose à cet effet une aube pour turbine de turbomachine d'aéronef, comprenant un pied d'aube définissant une extrémité radialement interne de l'aube et une pale s'étendant radialement vers l'extérieur à partir du pied d'aube et présentant une paroi d'intrados et une paroi d'extrados raccordée à la paroi d'intrados au niveau d'un bord d'attaque et d'un bord de fuite de la pale, la pale comprenant au moins un circuit de refroidissement interne.

Ledit circuit de refroidissement interne comporte une pluralité de cavités interconnectées en série et se répartissant en :
- au moins une cavité s'étendant radialement le long de la paroi d'extrados, ci-après dénommée « cavité d'extrados », et
- des cavités s'étendant radialement le long de la paroi d'intrados, ci-après dénommées « cavités d'intrados », en un nombre égal au nombre de cavité(s) d'extrados augmenté de un.

De plus, la ou chaque cavité d'extrados est séparée d'au moins une des cavités d'intrados par une première paroi interne de la pale s'étendant entre les parois d'intrados et d'extrados.

Chaque cavité d'intrados présente une section d'entrée d'air et une section de sortie d'air, ladite section de sortie d'air de la cavité d'intrados étant agencée radialement vers l'extérieur par rapport à ladite section d'entrée d'air de cette même cavité d'intrados.

La ou chaque cavité d'extrados comporte une section d'entrée d'air raccordée à la section de sortie d'air de l'une des cavités d'intrados et une section de sortie d'air raccordée à la section d'entrée d'air d'une autre des cavités d'intrados, ladite section de sortie d'air de la cavité d'extrados étant agencée radialement vers l'intérieur par rapport à ladite section d'entrée d'air de cette même cavité d'extrados.

Enfin, ladite section d'entrée d'air de l'une des cavités d'intrados est raccordée à des moyens d'alimentation en air de refroidissement.

Ainsi, l'invention permet que l'air circulant le long de la paroi d'intrados soit dévié par la force de Coriolis en direction de cette paroi d'intrados et que l'air circulant le long de la paroi d'extrados soit dévié par la force de Coriolis en direction de cette paroi d'extrados.

L'invention permet ainsi d'améliorer considérablement l'homogénéité du refroidissement procuré par le circuit de refroidissement de la pale.

De plus, ladite au moins une cavité d'extrados est agencée en regard de deux desdites cavités d'intrados, dont elle est séparée par ladite première paroi interne de la pale, et ladite au moins une cavité d'extrados comporte au moins un premier déflecteur s'étendant en saillie depuis la paroi d'extrados en direction de la première paroi interne de la pale.

Selon l'invention, ledit premier déflecteur présente une concavité orientée radialement vers l'extérieur et en direction d'une paroi latérale de la cavité d'extrados disposée du côté de la cavité d'intrados à laquelle est raccordée la section de sortie d'air de ladite au moins une cavité d'extrados.

Un tel premier déflecteur permet d'orienter une partie du flux d'air en direction d'une zone écartée du trajet principal suivi par l'air au sein du circuit de refroidissement.

De préférence, le premier déflecteur est raccordé à la première paroi interne de la pale.

En variante, le premier déflecteur peut s'arrêter à distance de la première paroi interne de la pale.

De préférence, chaque cavité d'intrados est séparée d'au moins une autre cavité d'intrados adjacente par une deuxième paroi interne de la pale reliant la paroi d'intrados à la première paroi interne de la pale.

Le premier déflecteur comporte avantageusement une extrémité radialement externe s'étendant dans la section d'entrée d'air de ladite au moins une cavité d'extrados et une extrémité radialement interne raccordée à ladite paroi latérale de la cavité d'extrados disposée du côté de la cavité d'intrados à laquelle est raccordée la section de sortie de la cavité d'extrados, ledit premier déflecteur étant pourvu d'orifices de passage d'air traversants.

Le déflecteur permet ainsi d'orienter une partie du flux d'air en direction d'une zone radialement externe de la cavité d'extrados, cette zone étant décalée par rapport à l'entrée d'air de cette cavité.

De préférence, ladite au moins une cavité d'extrados comporte au moins un deuxième déflecteur s'étendant en saillie depuis la paroi d'extrados en direction de la première paroi interne de la pale en s'arrêtant à distance de la première paroi interne, et configuré en forme de V inversé à sommet orienté radialement vers l'extérieur.

Un tel déflecteur permet d'orienter une partie du flux d'air en direction de régions latérales de la cavité.

De préférence, la section de sortie d'air de l'une des cavités d'intrados dudit circuit de refroidissement communique avec l'extérieur de l'aube au travers d'orifices de sortie d'air formés dans au moins l'une de :
- la paroi d'intrados, et
- une paroi de fond délimitant une extrémité radialement externe de la cavité d'intrados.

Ces orifices de sortie sont de préférence agencés dans des régions relativement chaudes de la paroi d'intrados.

De préférence, la pale comporte un autre circuit de refroidissement interne semblable audit circuit de refroidissement interne.

L'invention concerne également une turbine pour turbomachine d'aéronef, comprenant au moins un disque rotatif muni d'aubes du type décrit ci-dessus.

L'invention concerne aussi une turbomachine pour aéronef, comprenant au moins une turbine du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une vue schématique en section transversale d'une aube de turbine de turbomachine d'aéronef d'un type connu ;
- la figure 2 est une vue schématique en perspective d'une aube pour turbine de turbomachine d'aéronef selon un mode de réalisation préféré de l'invention ;
- les figures 3 à 5 sont des vues schématiques en section transversale de la pale de l'aube de la figure 2, respectivement selon les plans III-III, IV-IV et V-V de la figure 2 ;
- la figure 6 est une vue schématique partielle, développée en plan, de la paroi d'extrados de la pale de l'aube de la figure 2, vue depuis l'intérieur d'une cavité extrados d'un circuit de refroidissement interne de la pale ;
- la figure 7 est une vue semblable à la figure 4, illustrant une variante de réalisation de l'invention ;
- la figure 8 est une vue semblable à la figure 4, illustrant une autre variante de réalisation de l'invention.

Dans l'ensemble de ces figures, des références identiques peuvent désigner des éléments identiques ou analogues.

### EXPOSÉ DÉTAILLÉ DE MODES DE RÉALISATION PRÉFÉRÉS

La figure 2 illustre une aube 30 pour turbine de turbomachine d'aéronef selon un mode de réalisation préféré de l'invention, comprenant de manière générale un pied d'aube 32 auquel est raccordée une pale 34 se terminant par un sommet 35 de l'aube du côté opposé au pied d'aube 32. Le pied d'aube comporte une partie radialement interne destinée à permettre la retenue de l'aube par emboîtement dans un disque de rotor, d'une manière bien connue. De plus, le pied d'aube est raccordé à la pale par l'intermédiaire d'une plateforme 36 aérodynamique destinée à délimiter intérieurement un canal d'écoulement de flux primaire au sein de la turbine.

Dans la présente description, la direction X est une direction correspondant à la direction de l'axe moteur lorsque l'aube 30 est montée sur un disque de rotor au sein d'une turbine de turbomachine. La direction Z est la direction radiale par rapport à la direction X, qui se confond avec la direction de la longueur ou de l'envergure de l'aube. La direction Y est telle que les trois directions X, Y et Z forment un repère orthogonal. Un plan est dit transversal s'il est parallèle aux directions X et Y.

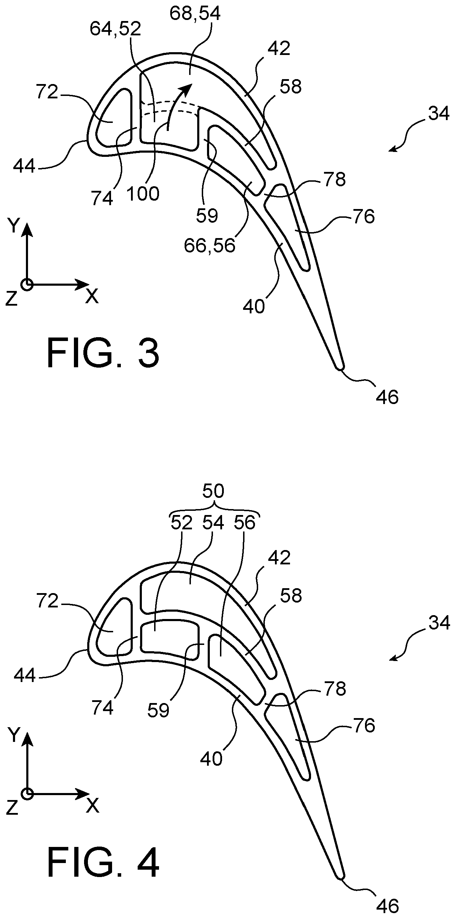

Comme le montrent les figures 3 à 5 illustrant la pale 34 en section transversale, respectivement selon les plans III-III, IV-IV et V-V de la figure 2, la pale comporte de manière générale une paroi d'intrados 40 et une paroi d'extrados 42 raccordées l'une à l'autre au niveau d'un bord d'attaque 44 et au niveau d'un bord de fuite 46 de la pale.

La pale 34 comprend un circuit de refroidissement interne 50 formé de trois cavités interconnectées en série et s'étendant chacune radialement, c'est à dire selon la direction de l'envergure de la pale.

Ces trois cavités, visibles sur la figure 4, se répartissent en une première cavité 52, une deuxième cavité 54 et une troisième cavité 56. La deuxième cavité 54 s'étend le long de la paroi d'extrados 42, et est par commodité dénommée « cavité d'extrados » dans ce qui suit. En revanche, les première et troisième cavités 52, 56 s'étendent le long de la paroi d'intrados 40, et sont dénommées « cavités d'intrados » dans ce qui suit. Dans l'exemple illustré, les cavités d'intrados 52, 56 du circuit de refroidissement sont ainsi au nombre de deux, tandis que ce circuit de refroidissement comporte une unique cavité d'extrados 54.

La cavité d'extrados 54 est séparée des cavités d'intrados 52 et 56 par une première paroi interne 58 de la pale, qui s'étend entre les parois d'intrados 40 et d'extrados 42, à distance de chacune de ces parois. Les deux cavités d'intrados 52 et 56 sont séparées l'une de l'autre par une deuxième paroi interne 59 de la pale, qui relie la paroi d'intrados 40 à la première paroi interne 58 de la pale.

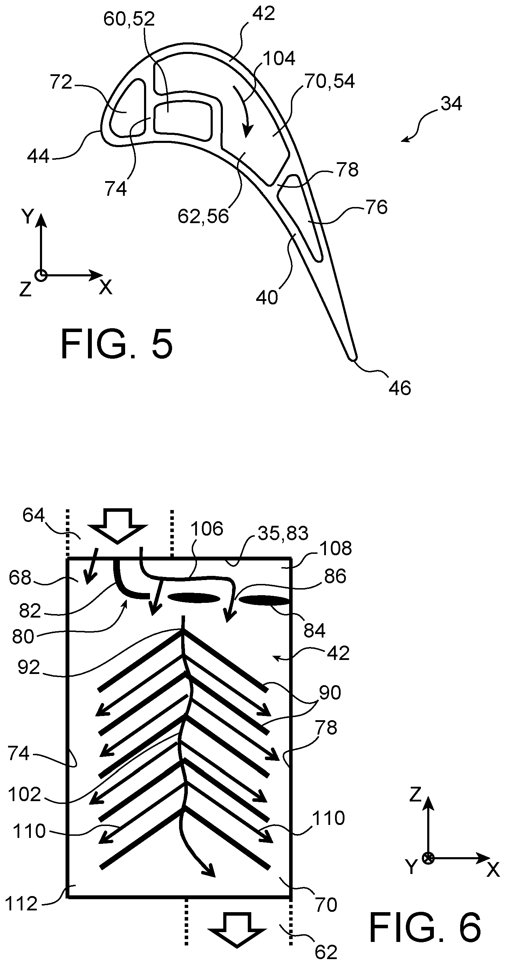

De plus, chaque cavité d'intrados 52, 56 présente une section d'entrée d'air 60, 62 (figure 5) et une section de sortie d'air 64, 66 (figure 3), agencées de sorte que la section de sortie d'air 64, 66 de chaque cavité d'intrados soit positionnée radialement vers l'extérieur par rapport à la section d'entrée d'air 60, 62 de cette même cavité d'intrados, comme l'illustre la position relative des plans III-III et V-V de la figure 2 qui correspondent respectivement aux figures 3 et 5. Dans l'exemple illustré, la section d'entrée d'air 60, 62 de chaque cavité d'intrados 52, 56 forme une région d'extrémité radialement interne de la cavité, tandis que la section de sortie d'air 64 de la cavité d'intrados 52 forme une région d'extrémité radialement externe de la cavité.

En outre, la cavité d'extrados 54 comporte une section d'entrée d'air 68 raccordée à la section de sortie d'air 64 de la cavité d'intrados 52, et la cavité d'extrados 54 comporte une section de sortie d'air 70 raccordée à la section d'entrée d'air 62 de l'autre cavité d'intrados 56. La section de sortie d'air 70 de la cavité d'extrados est agencée radialement vers l'intérieur par rapport à la section d'entrée d'air 68 de cette même cavité d'extrados, comme l'illustre la position relative des plans V-V et III-III de la figure 2 qui correspondent respectivement aux figures 5 et 3. Dans l'exemple illustré, la section de sortie d'air 70 de la cavité d'extrados 54 forme une région d'extrémité radialement interne de la cavité, tandis que la section d'entrée d'air 68 de cette cavité d'extrados forme une région d'extrémité radialement externe de la cavité.

La section d'entrée d'air 60 de la cavité d'intrados 52 (figure 5) est raccordée à un dispositif d'alimentation en air de refroidissement intégré au pied 32 de l'aube 30. Ce dispositif d'alimentation en air de refroidissement n'est pas visible sur les figures et peut être d'un type connu de l'homme du métier.

L'interconnexion en série des trois cavités 52, 54, 56 permet ainsi la circulation d'un flux d'air de refroidissement depuis l'entrée d'air 60 de la cavité d'intrados 52 raccordée au dispositif d'alimentation en air de refroidissement jusque dans la section de sortie 66 de l'autre cavité d'intrados 56.

De plus, la cavité d'intrados 56 communique avec l'extérieur de l'aube au travers d'orifices de sortie d'air formés dans la paroi d'intrados (non visibles sur les figures). Des orifices de sortie d'air supplémentaires de la cavité d'intrados 56 peuvent être formés dans une paroi de fond délimitant une extrémité radialement externe de la cavité. Dans la terminologie de la présente description, la « section de sortie d'air » 66 de la cavité d'intrados 56 correspond à la portion de cette cavité s'étendant en regard des orifices de sortie d'air précités.

Indépendamment du circuit de refroidissement 50 décrit ci-dessus propre à l'invention, la pale 34 intègre en outre une cavité de refroidissement de bord d'attaque 72 s'étendant le long du bord d'attaque 44 de la pale et délimitée par une troisième paroi interne 74 de la pale raccordée d'un côté à la paroi d'intrados 40 et de l'autre côté à la paroi d'extrados 42. La cavité de refroidissement de bord d'attaque 72 communique avec l'extérieur de l'aube, par exemple au moyen d'orifices de sortie d'air ménagés au travers des parois d'intrados et d'extrados (ces orifices n'étant pas visibles sur les figures).

L'alimentation en air de la cavité de refroidissement de bord d'attaque 72 est de préférence assurée par un raccordement de cette cavité à un dispositif d'alimentation en air de refroidissement intégré au pied 32 de l'aube 30, d'une manière connue en soi couramment dénommée « alimentation directe ». Ce dispositif est en général distinct du dispositif alimentant le circuit de refroidissement 50.

De manière analogue, la pale 34 comporte une cavité de refroidissement de bord de fuite 76 s'étendant le long du bord de fuite 46 de la pale et délimitée par une quatrième paroi interne 78 de la pale raccordée d'un côté à la paroi d'intrados 40 et de l'autre côté à la paroi d'extrados 42. La cavité de refroidissement de bord de fuite 76 communique avec l'extérieur de l'aube au moyen d'orifices de sortie d'air ménagés au travers de la paroi d'intrados 40 et prenant par exemple la forme de fentes 79 (visibles sur la figure 2) s'étendant sensiblement parallèlement à un plan transversal.

L'alimentation en air de la cavité de refroidissement de bord de fuite 76 est par exemple assurée par un raccordement de cette cavité à un dispositif d'alimentation en air de refroidissement intégré au pied 32 de l'aube 30, d'une manière connue en soi couramment dénommée « alimentation directe ». Ce dispositif est de préférence distinct du dispositif alimentant le circuit de refroidissement 50.

Par ailleurs, la figure 6 illustre des caractéristiques préférentielles du circuit de refroidissement 50, permettant d'optimiser l'efficacité de ce dernier. Plus précisément, la figure 6 montre la paroi d'extrados 42 vue depuis l'intérieur de la cavité d'extrados 54, selon la direction Y, et développée en plan. Pour une meilleure compréhension du fonctionnement, la figure 6 montre aussi la section de sortie 64 de la cavité d'intrados 52 et la section d'entrée 62 de la cavité d'intrados 56, qui par commodité de dessin ont été représentées respectivement au-dessus et au-dessous de la cavité d'extrados. Il faut comprendre que ces sections ne sont en réalité pas localisées de cette manière, mais en regard de cette cavité et en dehors du plan de la figure 6.

Comme le montre la figure 6, la cavité d'extrados 54 comporte un premier déflecteur 80 s'étendant en saillie depuis la paroi d'extrados 42 en direction de la première paroi interne 58 de la pale, c'est à dire dans la direction des cotes Y décroissantes. Dans l'exemple illustré, le premier déflecteur 80 est raccordé à la première paroi interne 58, et est incurvé, avec une concavité orientée radialement vers l'extérieur et en direction de la quatrième paroi interne 78 qui forme une paroi latérale de la cavité d'extrados 54 délimitant cette dernière du côté du bord de fuite 46, c'est à dire plus généralement du côté de la cavité d'intrados 56 à laquelle est raccordée la section de sortie 70 de la cavité d'extrados. En variante, le premier déflecteur 80 peut présenter une extrémité libre s'étendant à distance de la première paroi interne 58.

Dans l'exemple illustré, le premier déflecteur 80 présente une partie d'extrémité radialement externe 82 s'étendant sensiblement selon les directions Z et Y, jusqu'à une extrémité radialement externe de la cavité d'extrados 54, c'est à dire typiquement jusqu'à la paroi de fond 83 de la pale fermant les cavités 52, 54, 56, 72, 76 dans la direction radiale vers l'extérieure. La partie d'extrémité radialement externe 82 s'étend de préférence dans la section d'entrée d'air 68 de la cavité d'extrados 54, donc du côté de la troisième paroi interne 74. De plus, le premier déflecteur 80 présente une partie d'extrémité radialement interne 84 s'étendant sensiblement selon les directions X et Y, et raccordée à la quatrième paroi interne 78. Enfin, le premier déflecteur 80 comporte des orifices de passage d'air 86.

Comme le montre la figure 6, la cavité d'extrados 54 comporte des deuxièmes déflecteurs 90 s'étendant en saillie depuis la paroi d'extrados 42 en direction de la première paroi interne 58 de la pale. Les deuxièmes déflecteurs 90 présentent chacun une extrémité libre s'étendant à distance de la première paroi interne 58. Ces deuxièmes déflecteurs 90 sont configurés en forme de V inversé à sommet 92 orienté radialement vers l'extérieur, c'est à dire vers la paroi de fond 83 délimitant les cavités 52, 54, 56, 72 et 76 du côté du sommet 35 de l'aube. Les sommets respectifs 92 des deuxièmes déflecteurs 90 sont avantageusement centrés sensiblement sur une même ligne parallèle à la direction radiale Z.

D'autres types de déflecteurs ou perturbateurs peuvent être utilisés en variante ou en complément.

De plus, un agencement de déflecteurs ou perturbateurs analogue à celui décrit ci-dessus en référence à la figure 6 peut être prévu en ce qui concerne la paroi d'intrados au sein des cavités d'intrados 52, 56, et/ou en ce qui concerne les parois internes 58, 74, 78, au sein des cavités 52, 54, 56.

Le fonctionnement du circuit de refroidissement 50 va maintenant être décrit.

Pour cela, il est considéré une turbomachine pour aéronef comprenant une turbine comprenant un disque rotatif de rotor portant l'aube 30 décrite ci-dessus. En pratique, le disque porte une pluralité d'aubes semblables à l'aube 30.

En fonctionnement, le circuit de refroidissement 50 est alimenté en air de refroidissement prélevé par exemple au niveau d'un étage de compresseur de la turbomachine.

L'air de refroidissement pénètre dans la cavité d'intrados 52 de l'aube 30 par la section d'entrée d'air 60 de cette cavité puis circule radialement vers l'extérieur au sein de cette cavité, c'est à dire dans la direction allant du pied d'aube 32 vers le sommet d'aube 35.

L'air de refroidissement passe ensuite dans la section de sortie 64 de la cavité d'intrados 52 puis dans la section d'entrée 68 de la cavité d'extrados 54 (flèche 100 sur la figure 3), puis l'air circule radialement vers l'intérieur au sein de cette cavité d'extrados 54, c'est à dire dans la direction allant du sommet d'aube 35 vers le pied d'aube 32 (flèche 102 sur la figure 6).

L'air de refroidissement passe ensuite dans la section de sortie 70 de la cavité d'extrados 54 puis dans la section d'entrée 62 de la cavité d'intrados 56 (flèche 104 sur la figure 5), puis l'air circule radialement vers l'extérieur au sein de cette cavité d'intrados 56.

Selon un principe de la présente invention, l'air circulant dans les cavités d'intrados 52 et 56 circule ainsi radialement vers l'extérieur tandis que l'air circulant dans la cavité d'extrados 54 circule radialement vers l'intérieur. De ce fait, l'air circulant dans les cavités d'intrados 52 et 56 est dévié vers la paroi d'intrados 40 par la force de Coriolis due à la rotation du rotor, tandis que l'air circulant dans la cavité d'extrados 54 est dévié vers la paroi d'extrados 42 par la force de Coriolis. Ainsi, les parois d'intrados et d'extrados sont refroidies de manière optimale et homogène.

Il est à noter que les retournements ou raccordements successifs entre les différentes cavités formant le circuit de refroidissement 50 sont orientés globalement dans la direction de l'épaisseur de la pale.

En particulier, l'air circulant dans la cavité d'extrados 54 est en partie dévié par le premier déflecteur 80 (flèche 106 de la figure 6) en direction de la quatrième paroi interne 78 dans une portion radialement externe de la cavité de manière à optimiser le refroidissement d'une zone 108 de la cavité d'extrados 54 proche de l'extrémité radialement externe de cette cavité et décalée par rapport à la sortie d'air 64 de la cavité d'intrados 52. L'air dévié par le premier déflecteur 80 passe ensuite au travers des orifices de passage d'air 86 et poursuit son trajet radialement vers l'intérieur.

De plus, le flux d'air 102 est en partie dévié vers les parois latérales de la cavité d'extrados 54, c'est à dire vers les troisième et quatrième parois internes 74 et 78 de la pale (flèches 110). Cela permet d'optimiser le refroidissement d'une zone 112 de la cavité d'extrados 54 proche de l'extrémité radialement interne de cette cavité et décalée par rapport à l'entrée d'air 62 de la cavité d'intrados 56.

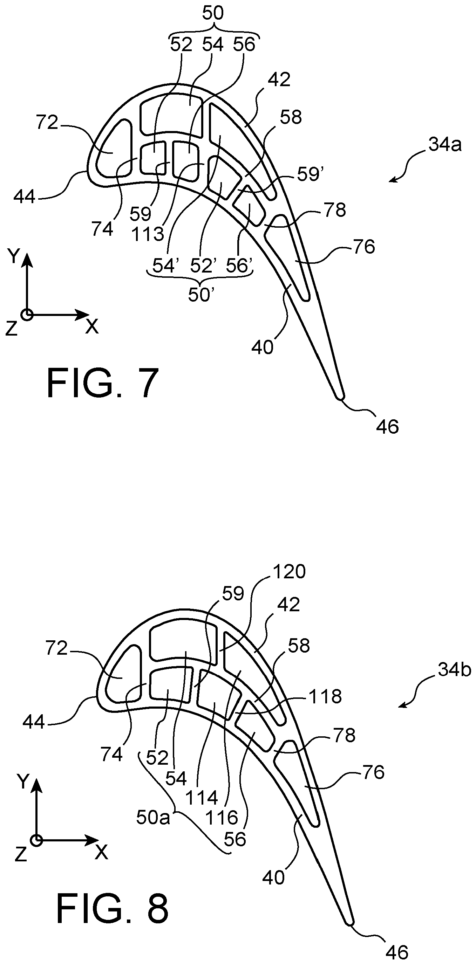

La figure 7 illustre la pale 34a d'une aube selon une variante de réalisation de l'invention, qui se distingue de l'aube 30 décrite ci-dessus du fait que la pale 34a comporte deux circuits de refroidissement 50 et 50'. Chacun de ces circuits de refroidissement est analogue au circuit de refroidissement 50 des figures 3 à 6.

Comme le montre la figure 7, les cavités d'intrados 56 et d'extrados 54 appartenant au circuit de refroidissement 50 situé du côté du bord d'attaque 44 sont séparées respectivement des cavités d'intrados 52' et d'extrados 54', appartenant au circuit de refroidissement 50' situé du côté du bord de fuite 46, par une cinquième paroi interne 113 de la pale reliant la cavité d'intrados 40 à la cavité d'extrados 42.

De plus, la section d'entrée d'air de la cavité d'intrados 52, 52' de chacun des deux circuits de refroidissement 50 et 50' est raccordée au dispositif d'alimentation en air de refroidissement intégré au pied 32 de l'aube 30.

Bien entendu, le ou chaque circuit de refroidissement selon l'invention peut comprendre un nombre de cavités plus élevé que dans les exemples décrits ci-dessus, dès lors que le nombre de cavités d'intrados est égal au nombre de cavités d'extrados augmenté de un.

Ainsi, la figure 8 illustre la pale 34b d'une aube selon une autre variante de réalisation de l'invention, qui se distingue de l'aube 30 décrite ci-dessus du fait que la pale 34b comporte un circuit de refroidissement 50a comprenant deux cavités d'extrados et trois cavités d'intrados interconnectées en série.

Plus précisément, une cavité d'intrados intermédiaire 114 est positionnée entre la cavité d'intrados 52, raccordée au dispositif d'alimentation en air de refroidissement, et la cavité d'intrados 56débouchant à l'extérieur de la pale par les orifices de sortie d'air décrits ci-dessus. De plus, une cavité d'extrados 116 est positionnée à côté de la cavité d'extrados 54.

Les cavités d'intrados 114 et 56 sont séparées l'une de l'autre par une cinquième paroi interne 118 de la pale reliant la paroi d'intrados 40 à la première paroi interne 58, tandis que les cavités d'extrados 54 et 116 sont séparées l'une de l'autre par une sixième paroi interne 120 de la pale, reliant la première paroi interne 58 à la paroi d'extrados 42.

La section de sortie de la cavité d'intrados intermédiaire 114 est raccordée à la section d'entrée de la cavité d'extrados 116, et la section de sortie de la cavité d'extrados 116 est raccordée à la section d'entrée de la cavité d'intrados 56.

Ainsi, l'air de refroidissement circule radialement vers l'extérieur le long de la paroi d'intrados 40 dans chacune des cavités d'intrados 52, 114 et 56, et il circule radialement vers l'intérieur le long de la paroi d'extrados 42 dans chacune des cavités d'extrados 54 et 116.

## Revendications

1. Aube (30) pour turbine de turbomachine d'aéronef, comprenant un pied d'aube (32) définissant une extrémité radialement interne de l'aube et une pale (34) s'étendant radialement vers l'extérieur à partir du pied d'aube et présentant une paroi d'intrados (40) et une paroi d'extrados (42) raccordée à la paroi d'intrados au niveau d'un bord d'attaque (44) et d'un bord de fuite (46) de la pale, la pale comprenant au moins un circuit de refroidissement interne (50 ; 50' ; 50a),
dans laquelle ledit circuit de refroidissement interne comporte une pluralité de cavités interconnectées en série et se répartissant en :
- au moins une cavité (54; 54, 54'; 54, 116) s'étendant radialement le long de la paroi d'extrados (42), ci-après dénommée cavité d'extrados et
- des cavités (52, 56 ; 52', 56' ; 52, 114, 56) s'étendant radialement le long de la paroi d'intrados (40), ci-après dénommées cavités d'intrados, en un nombre égal au nombre de cavité(s) d'extrados augmenté de un,
et dans laquelle :
- la ou chaque cavité d'extrados (54; 54, 54' ; 54, 116) est séparée d'au moins une des cavités d'intrados (52, 56 ; 52', 56' ; 52, 114, 56) par une première paroi interne (58) de la pale s'étendant entre les parois d'intrados (40) et d'extrados (42),
- chaque cavité d'intrados (52, 56 ; 52, 56, 52', 56' ; 52, 114, 56) présente une section d'entrée d'air (60, 62) et une section de sortie d'air (64, 66), ladite section de sortie d'air de la cavité d'intrados étant agencée radialement vers l'extérieur par rapport à ladite section d'entrée d'air de cette même cavité d'intrados,
- la ou chaque cavité d'extrados (54; 54, 54'; 54, 116) comporte une section d'entrée d'air (68) raccordée à la section de sortie d'air (64) de l'une (52; 52, 52' ; 52, 114) des cavités d'intrados et une section de sortie d'air (70) raccordée à la section d'entrée d'air d'une autre (56 ; 56, 56' ; 114, 56) des cavités d'intrados, ladite section de sortie d'air (70) de la cavité d'extrados étant agencée radialement vers l'intérieur par rapport à ladite section d'entrée d'air (68) de cette même cavité d'extrados,
- ladite section d'entrée d'air (60) de l'une des cavités d'intrados (52 ; 52, 52' ; 52) est raccordée à des moyens d'alimentation en air de refroidissement,
- ladite au moins une cavité d'extrados (54 ; 54, 54' ; 54, 116) est agencée en regard de deux desdites cavités d'intrados (52, 56 ; 52, 56, 52', 56' ; 52, 114, 56), dont elle est séparée par ladite première paroi interne (58) de la pale, et
- ladite au moins une cavité d'extrados comporte au moins un premier déflecteur (80) s'étendant en saillie depuis la paroi d'extrados (42) en direction de la première paroi interne (58) de la pale,
**caractérisée en ce que** ledit premier déflecteur (80) présente une concavité orientée radialement vers l'extérieur et en direction d'une paroi latérale (78 ; 113, 78 ; 120, 78) de la cavité d'extrados disposée du côté de la cavité d'intrados à laquelle est raccordée la section de sortie d'air (70) de ladite au moins une cavité d'extrados.

2. Aube selon la revendication 1, dans laquelle le premier déflecteur (80) est raccordé à la première paroi interne (58) de la pale.

3. Aube selon la revendication 1, dans laquelle le premier déflecteur (80) s'arrête à distance de la première paroi interne (58) de la pale.

4. Aube selon l'une quelconque des revendications 1 à 3, dans laquelle chaque cavité d'intrados (52, 56 ; 52, 56, 52', 56' ; 52, 114, 56) est séparée d'au moins une autre cavité d'intrados adjacente par une deuxième paroi interne (59 ; 59, 59', 113 ; 59, 118) de la pale reliant la paroi d'intrados (40) à la première paroi interne (58) de la pale.

5. Aube selon l'une quelconque des revendications 1 à 4, dans laquelle le premier déflecteur (80) comporte une extrémité radialement externe (82) s'étendant dans la section d'entrée d'air (68) de ladite au moins une cavité d'extrados (54 ; 54, 54' ; 54, 116) et une extrémité radialement interne (84) raccordée à ladite paroi latérale (78; 113, 78; 120, 78) de la cavité d'extrados disposée du côté de la cavité d'intrados (56 ; 56, 56' ; 114, 56) à laquelle est raccordée la section de sortie de la cavité d'extrados, ledit premier déflecteur étant pourvu d'orifices de passage d'air traversants (86).

6. Aube selon l'une quelconque des revendications 1 à 5, dans laquelle ladite au moins une cavité d'extrados (54; 54, 54' ; 54, 116) comporte au moins un deuxième déflecteur (90) s'étendant en saillie depuis la paroi d'extrados (42) en direction de la première paroi interne (58) de la pale en s'arrêtant à distance de la première paroi interne, et configuré en forme de V inversé à sommet (92) orienté radialement vers l'extérieur.

7. Aube selon l'une quelconque des revendications 1 à 6, dans laquelle la section de sortie d'air (66) de l'une des cavités d'intrados (56; 56, 56' ; 56) dudit circuit de refroidissement communique avec l'extérieur de l'aube au travers d'orifices de sortie d'air formés dans au moins l'une de :
- la paroi d'intrados (40), et
- une paroi de fond (83) délimitant une extrémité radialement externe de la cavité d'intrados.

8. Aube selon l'une quelconque des revendications 1 à 7, dans laquelle la pale comporte un autre circuit de refroidissement interne (50') semblable audit circuit de refroidissement interne (50).

9. Turbine pour turbomachine d'aéronef, **caractérisée en ce qu'**elle comprend au moins un disque rotatif muni d'aubes (30) selon l'une quelconque des revendications 1 à 8.

10. Turbomachine pour aéronef, **caractérisée en ce qu'**elle comprend au moins une turbine selon la revendication 9.

## Patentansprüche

1. Schaufel (30) für Turbinen in Flugzeug-Turbotriebwerken, die einen Schaufelfuß (32) hat, der ein radial inneres Ende der Schaufel bildet, und ein Schaufelblatt (34) hat, das sich radial vom Schaufelfuß aus nach außen erstreckt und eine Druckseitenwand (40) aufweist sowie eine Saugseitenwand (42), die mit der Druckseitenwand im Bereich einer Vorderkante (44) und einer Hinterkante (46) des Schaufelblattes verbunden ist, wobei das Schaufelblatt mindestens einen inneren Kühlkreislauf (50; 50'; 50a) enthält, wobei der genannte innere Kühlkreislauf eine Mehrzahl von Hohlräumen enthält, die in Reihe miteinander verbunden sind und sich aufteilen in:
- mindestens einen Hohlraum (54; 54, 54'; 54, 116), der sich radial entlang der Saugseitenwand (42) erstreckt, im Folgenden Saugseiten-Hohlraum genannt, und
- Hohlräume (52, 56; 52', 56'; 52, 114, 56), die sich radial entlang der Druckseitenwand (40) erstrecken, im Folgenden Druckseiten-Hohlräume genannt, und zwar in der Anzahl des (der) Saugseiten-Hohlraums (-Hohlräume) plus eins,
und wobei
- der oder jeder Saugseiten-Hohlraum (54; 54, 54'; 54, 116) von mindestens einem der Druckseiten-Hohlräume (52, 56; 52', 56'; 52, 114, 56) durch eine erste Innenwand (58) des Schaufelblattes getrennt ist, die sich zwischen der Druckseitenwand (40) und der Saugseitenwand (42) erstreckt,
- jeder Druckseiten-Hohlraum (52, 56; 52, 56; 52', 56'; 52, 114, 56) einen Lufteinlass-Bereich (60, 62) und einen Luftauslass-Bereich (64, 66) aufweist, wobei dieser Luftauslass-Bereich des Druckseiten-Hohlraums gegenüber dem genannten Lufteinlass-Bereich des gleichen Druckseiten-Hohlraums radial nach außen hin ausgeführt ist,
- der oder jeder Saugseiten-Hohlraum (54; 54, 54'; 54, 116) einen Lufteinlass-Bereich (68) enthält, der mit dem Luftauslass-Bereich (64) eines der Druckseiten-Hohlräume (52; 52, 52'; 52, 114) verbunden ist, sowie einen Luftauslass-Bereich (70) enthält, der mit dem Lufteinlass-Bereich eines anderen der Druckseiten-Hohlräume (56; 56, 56'; 114, 56) verbunden ist, wobei der genannte Luftauslass-Bereich (70) des Saugseiten-Hohlraums gegenüber dem genannten Lufteinlass-Bereich (68) des gleichen Saugseiten-Hohlraums radial nach innen hin ausgeführt ist,
- der genannte Lufteinlass-Bereich (60) einer der Druckseiten-Hohlräume (52; 52, 52'; 52) mit Kühlungsluft-Zuführmitteln verbunden ist,
- der genannte mindestens eine Saugseiten-Hohlraum (54; 54, 54'; 54, 116) gegenüber zwei der genannten Druckseiten-Hohlräume (52, 56; 52, 56; 52', 56'; 52, 114, 56) angeordnet ist, von denen er durch die genannte erste Innenwand (58) des Schaufelblattes getrennt ist, und
- der genannte mindestens eine Saugseiten-Hohlraum mindestens einen ersten Deflektor (80) enthält, der sich von der Saugseitenwand (42) aus hervorstehend in Richtung der ersten Innenwand (58) des Schaufelblattes erstreckt,
**dadurch gekennzeichnet,**
**dass** dieser erste Deflektor (80) eine Hohlfläche aufweist, die radial nach außen und in Richtung einer Seitenwand (78; 113, 78; 120, 78) des Saugseiten-Hohlraums geführt ist, die auf der Seite des Druckseiten-Hohlraums angeordnet ist, mit dem der Luftauslass-Bereich (70) des mindestens einen Saugseiten-Hohlraums verbunden ist.

2. Schaufel nach Anspruch 1, bei der der erste Deflektor (80) mit der ersten Innenwand (58) des Schaufelblattes verbunden ist.

3. Schaufel nach Anspruch 1, bei der der erste Deflektor (80) in Abstand zu der ersten Innenwand (58) des Schaufelblattes endet.

4. Schaufel nach einem der Ansprüche 1 bis 3, bei der jeder Druckseiten-Hohlraum (52, 56; 52, 56; 52', 56'; 52, 114, 56) von mindestens einem weiteren angrenzenden Druckseiten-Hohlraum durch eine zweite Innenwand (59; 59, 59'; 113; 59, 118) des Schaufelblattes getrennt ist, die die Druckseitenwand (40) mit der ersten Innenwand (58) des Schaufelblattes verbindet.

5. Schaufel nach einem der Ansprüche 1 bis 4, bei der der erste Deflektor (80) ein radial äußeres Ende (82) aufweist, das sich in dem Lufteinlass-Bereich (68) des genannten mindestens einen Saugseiten-Hohlraums (54; 54, 54'; 54, 116) erstreckt, sowie ein radial inneres Ende (84) aufweist, das mit der genannten Seitenwand (78; 113, 78; 120, 78) des Saugseiten-Hohlraums verbunden ist, die auf der Seite des Druckseiten-Hohlraums (56; 56, 56'; 114, 56) angeordnet ist, mit dem der Luftauslass-Bereich des Saugseiten-Hohlraums verbunden ist, wobei dieser erste Deflektor mit durchgehenden Luftdurchlassöffnungen (86) versehen ist.

6. Schaufel nach einem der Ansprüche 1 bis 5, bei der der genannte mindestens eine Saugseiten-Hohlraum (54; 54, 54'; 54, 116) mindestens einen zweiten Deflektor (90) enthält, der sich von der Saugseitenwand (42) aus hervorstehend in Richtung der ersten Innenwand (58) des Schaufelblattes erstreckt, wobei er in Abstand zu der ersten Innenwand endet, und in Form eines umgekehrten V mit Spitze (92) gestaltet ist, die radial nach außen gerichtet ist.

7. Schaufel nach einem der Ansprüche 1 bis 6, bei der der Luftauslass-Bereich (66) eines der Druckseiten-Hohlräume (56; 56, 56'; 56) des genannten Kühlkreislaufs mit dem Außernbereich der Schaufel kommuniziert, und zwar durch Luftauslassöffnungen, die in mindestens einer der folgenden Wände gebildet sind:
- der Druckseitenwand (40), und
- einer Bodenwand (83), die ein radial äußeres Ende des Druckseiten-Hohlraums bildet,

8. Schaufel nach einem der Ansprüche 1 bis 7, bei der das Schaufelblatt einen weiteren inneren Kühlkreislauf (50') enthält, der dem inneren Kühlkreislauf (50) gleicht.

9. Turbine für Flugzeug-Turbotriebwerke,
**dadurch gekennzeichnet,**
**dass** sie mindestens eine Laufscheibe mit Schaufeln (30) nach einem der Ansprüche 1 bis 8 aufweist.

10. Turbotriebwerk für Flugzeuge,
**dadurch gekennzeichnet,**
**dass** es mindestens eine Turbine nach Anspruch 9 aufweist.

## Claims

1. A blade (30) for an aircraft turbomachine turbine, comprising a blade root (32) defining a radially internal end of the blade and an airfoil part (34) radially extending toward the outside from the blade root and having a pressure-side wall (40) and a suction-side wall (42) connected to the pressure-side wall at a leading edge (44) and at a trailing edge (46) of the airfoil part, the airfoil part comprising at least one internal cooling circuit (50; 50'; 50a),
wherein said internal cooling circuit includes a plurality of cavities interconnected in series and distributed into:
- at least one cavity (54; 54, 54'; 54, 116) radially extending along the suction-side wall (42), hereinafter referred to as a suction-side cavity, and
- cavities (52, 56; 52', 56'; 52, 114, 56) radially extending along the pressure-side wall (40), hereinafter referred to as pressure-side cavities, in an equal number to the number of suction-side cavity or cavities increased by one,
and wherein:
- the or each suction-side cavity (54; 54, 54'; 54, 116) is separated from at least one of the pressure-side cavities (52, 56; 52', 56'; 52, 114, 56) by a first internal wall (58) of the airfoil part extending between the pressure-side (40) and the suction-side (42) walls,
- each pressure-side cavity (52, 56; 52, 56, 52', 56'; 52, 114, 56) has an air inlet section (60, 62) and an air outlet section (64, 66), said air outlet section of the pressure-side cavity being radially arranged toward the outside with respect to said air inlet section of this same pressure-side cavity,
- the or each suction-side cavity (54; 54, 54'; 54, 116) includes an air inlet section (68) connected to the air outlet section (64) of one (52; 52, 52'; 52, 114) of the pressure-side cavities and an air outlet section (70) connected to the air inlet section of another (56; 56, 56'; 114, 56) of the pressure-side cavities, said air outlet section (70) of the suction-side cavity being radially arranged toward the inside with respect to said air inlet section (68) of this same suction-side cavity,
- said air inlet section (60) of one of the pressure-side cavities (52; 52, 52'; 52) is connected to cooling air supply means,
- said at least one suction-side cavity (54; 54, 54'; 54, 116) is arranged facing two of said pressure-side cavities (52, 56; 52, 56, 52', 56'; 52, 114, 56), from which it is separated by said first internal wall (58) of the airfoil part, and
- said at least one suction-side cavity includes at least one first deflector (80) extending protruding from the suction-side wall (42) in the direction of the first internal wall (58) of the airfoil part,
**characterised in that** said first deflector (80) has a concavity radially oriented toward the outside towards a side wall (78; 113, 78; 120, 78) of the at least one suction-side cavity disposed on a same side as the pressure-side cavity to which the air outlet section (70) of said at least one suction-side cavity is connected.

2. The blade according to claim 1, wherein the first deflector (80) is connected to the first internal wall (58) of the airfoil part.

3. The blade according to claim 1, wherein the first deflector (80) stops at a distance from the first internal wall (58) of the airfoil part.

4. The blade according to any of claims 1 to 3, wherein each pressure-side cavity (52, 56; 52, 56, 52', 56'; 52, 114, 56) is separated from at least another adjacent pressure-side cavity by a second internal wall (59; 59, 59', 113; 59, 118) of the airfoil part linking the pressure-side wall (40) to the first internal wall (58) of the airfoil part.

5. The blade according to any of claims 1 to 4, wherein the first deflector (80) includes a radially external end (82) extending in the air inlet section (68) of said at least one suction-side cavity (54; 54, 54'; 54, 116) and a radially internal end (84) connected to said side wall (78; 113, 78; 120, 78) of the suction-side cavity disposed on the same side as the pressure-side cavity (56; 56, 56'; 114, 56) to which the outlet section of the suction-side cavity is connected, said first deflector being provided with air through-ports (86).

6. The blade according to any of claims 1 to 5, wherein said at least one suction-side cavity (54; 54, 54'; 54, 116) includes at least one second deflector (90) extending protruding from the suction-side wall (42) in the direction of the first internal wall (58) of the airfoil part stopping at a distance from the first internal wall, and configured as an inverted V with a vertex (92) radially oriented toward the outside.

7. The blade according to any of claims 1 to 6, wherein the air outlet section (66) of one of the pressure-side cavities (56; 56, 56'; 56) of said cooling circuit communicates with the outside of the blade through air outlet ports formed in at least one of:
- the pressure-side wall (40), and
- a bottom wall (83) delimiting a radially external end of the pressure-side cavity.

8. The blade according to any of claims 1 to 7, wherein the airfoil part includes another internal cooling circuit (50') similar to said internal cooling circuit (50).

9. An aircraft turbomachine turbine, **characterised in that** it comprises at least one rotary disk fitted with blades (30) according to any of claims 1 to 8.

10. An aircraft turbomachine, **characterised in that** it comprises at least one turbine according to claim 9.
